(19) Europäisches Patentamt
European Patent Office
Office européen des brevets

(11) **EP 4 621 710 A1**

(12) **EUROPEAN PATENT APPLICATION**

(43) Date of publication:
24.09.2025 Bulletin 2025/39

(51) International Patent Classification (IPC):
**G06T 7/00** (2017.01)  **G06T 7/90** (2017.01)
**G01N 21/64** (2006.01)  **G01J 3/44** (2006.01)
**G06V 20/69** (2022.01)

(21) Application number: 24164167.9

(22) Date of filing: 18.03.2024

(52) Cooperative Patent Classification (CPC):
**G06T 7/0012; G01J 3/28; G01J 3/4406; G06T 7/90; G06V 20/698**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: Leica Microsystems CMS GmbH
35578 Wetzlar (DE)

(72) Inventors:
• WALTER, Kai
35578 Wetzlar (DE)
• SCHUMANN, Christian
35578 Wetzlar (DE)
• FRIEDRICH, Lars
35578 Wetzlar (DE)

(74) Representative: 2SPL Patentanwälte PartG mbB
Landaubogen 3
81373 München (DE)

(54) **COMPUTER-IMPLEMENTED METHOD AND DATA PROCESSING DEVICE FOR EXTRACTING AT LEAST ONE SIGNAL IN A REGION OF AN IMAGE USING A CROSSTALK QUANTITY**

(57) The invention is concerned to provide an improved estimate of a signal (104, 106, 108) contained in a multiplexed digital input color image (100). This is achieved by a data processing device (420, 430) and a computer-implemented method (200) for computing an estimate (224) of a first signal (104) of a plurality of signals, the plurality of signals being contained in a digital color input image (100), each signal of the plurality of signals having a different ground truth spectrum (302, 308). The computer-implemented method (200) comprises the following steps, which the data processing device (420) is configured to execute: retrieve a proper subset (118) of the plurality of pixels (102) of the digital color input image (100); extract from the subset (118) by spectral unmixing (204) a preliminary estimate of the first signal (104) as a first unmixed signal (210) and a preliminary estimate of at least one further signal (106, 108) of the plurality of signals as at least one further unmixed signal (212, 214); compute (216) an estimate of a dependency of the first unmixed signal (210) on the at least one further signal (212, 214) as a crosstalk quantity (218, 220) for the subset (118); and remove (222) the crosstalk quantity (218, 220) from the first unmixed signal (210) to obtain the estimate (224) of the first signal (104) in the subset (118). The data processing device (420, 430) may be contained in an optical observation device (400, 410) such as a microscope, in particular a laboratory or surgical microscope.

FIG. 1B

EP 4 621 710 A1

## Description

The invention relates generally to image processing using a computer-implemented method and/or a data processing device. The invention further relates to an optical observation device, such as a microscope or endoscope, comprising the data processing device, and to a method of using such an optical observation device, the method comprising the computer-implemented method.

In image processing, it is often necessary to extract one or more signals from an image, particularly a digital color image. Such signals may, for example, correspond to the fluorescence emissions of different fluorophores and/or a fluorophore in different chemical environments in an object such as biological tissue, e.g. a cell, parts of a cell or part of the body of an organism. Fluorophores are often used as markers that accumulate in areas of the biological tissue that have specific properties. Other fluorophores are transported in vessels and used to mark passageways. Some fluorophores are naturally present in the object under observation. The type of biological tissue that is labeled depends on the chemical properties of the fluorophore. Other signals may be generated not by fluorescence emission, but by transmission of light through the object or reflection from the object.

More than one fluorophore may be present in a given area of biological tissue. Also, different fluorophores may be contained in separate areas that overlap along the optical axis and thus appear to be in the same part of the object.

In each of these cases, the signals may overlap not only spatially but, more importantly, spectrally and must be separated from one another as accurately as possible. Different fluorophores may have overlapping fluorescence emission spectra, or the fluorescence emission spectrum of a fluorophore may overlap with the fluorescence excitation spectrum of this or another fluorophore.

Thus, there is a need to provide a computer-implemented method and a data processing device that accurately separates at least one signal from at least one other signal contained in a digital color input image.

This need is addressed by providing a computer-implemented method for computing an estimate of a first signal of a plurality of signals, the plurality of signals being contained in a digital color input image, each signal of the plurality of signals having a different ground truth spectrum, the digital color input image comprising a plurality of pixels; wherein the computer-implemented method comprises the steps of: extracting a proper subset of the plurality of pixels from the digital color input image; extracting from the subset by spectral unmixing a preliminary estimate of the first signal as a first unmixed signals and a preliminary estimate of at least one further signal of the plurality of signals as at least one further unmixed signal; computing from the subset an estimate of a dependency of the first unmixed signal on the at least one further signal as a crosstalk quantity for the subset; and removing the crosstalk quantity from the first unmixed signal in the subset to obtain the estimate of the first signal in the subset.

The above need is also addressed by a data processing device for computing an estimate of a first signal of a plurality of signals, the plurality of signals being contained in a digital color input image, each signal of the plurality of signals having a different ground truth spectrum, the digital color input image comprising a plurality of pixels; wherein the data processing device is configured to retrieve a proper subset of the plurality of pixels of the digital color input image; extract from the subset by spectral unmixing a preliminary estimate of the first signal as a first unmixed signal and a preliminary estimate of the at least one further signal of the plurality of signals as at least one further unmixed signal; compute an estimate of a dependency of the first unmixed signal on the at least one further signal as a crosstalk quantity for the subset; and remove the crosstalk quantity from the first unmixed signal to obtain the estimate of the first signal in the subset.

In the digital color input image, the signals are superposed on one another so that they can be separated only computationally. The above computer-implemented method and data processing device improve the accuracy of estimate of the first signal by using the crosstalk quantity, i.e. of the unmixed signal. The crosstalk quantity reflects the dependency of the first unmixed signal from the at least one further unmixed signal. This is already an improvement over known spectral unmixing methods. Moveover, dividing the digital color input image into proper subsets and computing the crosstalk quantity not for the entire image but only for a subset constitutes a further improvement.

The above method may be further improved by the following features, which are independent of one another, may be arbitrarily combined with one another, and wherein each feature has its own technical effect. These features invariably apply to both a method and a device , regardless of whether the features are described in the context of a method or in the context of a device.

In one example, the digital color input comprises or may be generated using a plurality of color channels or, synonymously, color space coordinates. The digital color input image may be represented in any color space and may be, for example, a tristimulus, multispectral or hyperspectral image. Each color channel by itself can be considered as a (monochrome) image. The same may apply to the pixels of the digital color input image, which may be color pixels represented in any color space and/or may be multispectral or hyperspectral pixels. Each pixel may thus comprise a plurality of color channels. In the subset, at least two signals of the plurality of signals may comprise at least one identical color space coordinate.

Each signal is represented by color space coordinates, or more precisely, a tuple of color space coordinate. For example, in the RGB color space, each signal is represented by three color space coordinates representing the intensities of the respective signal in the red, green, and blue color channels. When more than one signal is present at an image location, such as a subset or, more specifically, a pixel, the color space coordinates reflect a superposition of these signals.

It is preferred that the number of color channels or color space coordinates of the digital color input image be at least as large as the number of signals to be extracted or estimated.

The proper subset extracted from the digital color input image may correspond to a connected, but not necessarily simply connected, region of the digital input image. The subset may also correspond to a disconnected region of the digital color input image. The subset may consist of one or more pixels. The pixels of the subset may be contiguous and/or non-contiguous.

In one embodiment, all pixels of the subset may have at least one color appearance parameter that is in the same predefined and preferably user-controllable range. The pixels of another, different subset may have at least one color appearance parameter that is in a different predefined and preferably user-controllable range. The color appearance parameters may comprise any of hue, lightness, brightness, chroma, colorfulness and saturation.

Alternatively or cumulatively, the pixels of a subset may be located in a predetermined neighborhood, i.e. within a certain maximum distance from one another. Collecting pixels in a subset according to location and/or at least one color appearance parameter can increase the accuracy of the estimate. For example, a subset may comprise a block of pixels of a predetermined, but preferably user-controllable size, such as 2x2, 3x3, 2x3, 4x4 etc. blocks of pixels.

The digital color input image may be viewed as a digital multiplexed color input image containing, in addition to the first signal, one or more further signals, wherein each of the one or more further signals of the plurality of signals has a respective ground truth spectrum that is different from the ground truth spectra of all other signals, in particular including the first signal. The expression "ground truth" refers to the signal (or its spectrum) as it would have been recorded under an ideal, artifact-free recording process. Thus, although the signals in the digital color input image are representative of the respective ground truth signals, they are only approximations of the respective ground truth signals.

One application of the data processing device and/or computer-implemented method is to process fluorescence images. For example, the first signal may correspond to a first fluorescence signal having a first spectrum. The first signal may be generated by or represent the fluorescence emission of a first fluorophore. The first signal may have a first spectrum representing a first fluorescence emission spectrum, i.e. the fluorescence emission spectrum of a first fluorophore.

The plurality of signals in the digital color input image may comprise two or at least two signals, such as three or four signals. Some or all of the signals may represent the fluorescence emission of a respectively different fluorophore, wherein each different fluorophore has a different fluorescence spectrum. Further, some or all of the signals may represent the different fluorescence spectra of the same fluorophore in different chemical environments. The fluorescence spectra of some fluorophores change significantly depending on the chemical environment.

According to another aspect, the plurality of signals may comprise one or more signals representative of an illumination spectrum of the object under observation. The illumination spectrum may consist of or comprise the fluorescence excitation spectrum of a fluorophore whose fluorescence is represented in a signal or the plurality of signals. According to another aspect, the illumination spectrum may contain, be contained within, or overlap with the fluorescence emission spectrum of a fluorophore represented by one of the plurality of signals. According to yet another aspect, the illumination spectrum may contain, be contained within, or overlap with a fluorescence excitation spectrum of a fluorophore represented by a signal of the plurality of signals. One, some, or all of the signals may represent a transmittance spectrum; one, some, or all of the signals may represent a reflectance spectrum.

The extraction of subsets and the subsequent extraction of the first unmixed signal and the at least one further unmixed signal, the computation from the subset of the crosstalk quantity for the subset and the removal of the crosstalk quantity from the first unmixed signal to obtain the estimate of the first signal in the subset can be performed repeatedly for different subsets until the combination of the extracted subset covers a predetermined portion, in particular all, of the digital color input image.

In such an embodiment it is preferred that the different subsets do not overlap. However, if subsets do overlap, an average crosstalk quantity can be computed for the overlapping subsets.

In a preferred embodiment, each subset contains only a single pixel. The crosstalk quantity then is computed individually for each pixel as described above and/or below, and removed from the preliminary estimate of an unmixed signal. In this way, all pixels of the digital color input image or of a predetermined, preferably user-selectable area of the digital color input image, which need not be connected, can be processed.

Since the unmixed signals are represented by their color space coordinates in the color space of the digital color input image, a crosstalk quantity can also be represented in color space coordinates, i.e., as a tuple of color space coordinates. Each color space coordinate of a crosstalk quantity represents the dependency of this color space coordinate of the preliminary estimate of one signal on the same color space coordinate of the preliminary estimate of another signal. If the color space of the digital color input image is anappropriate for computing the estimates, a transformation to another color space can be performed and all computations can be performed in that color space.

The estimate of the first signal (and any further signal) need not be the best estimate in a mathematical sense. From an application point of view, it may be preferable to set the estimate to zero if the crosstalk quantity exceeds a predetermined threshold, since in this case the estimate may be too unreliable to serve as a basis for further post-processing.

The crosstalk quantity may differ from subset to subset as it depends on the subset.

In the following, the crosstalk quantity that represents an estimate of the dependencies of the first unmixed signal on the at least one further signal is referred to as a "first crosstalk quantity" if additional crosstalk quantities are computed for the at least one further signal.

As stated above, the crosstalk quantity is representative of the influence of one or more other signals on another signal. Thus, a plurality of different crosstalk quantities may be computed for a subset. Each of these crosstalk quantities preferably represents the dependency of the preliminary estimate of one signal on the preliminary estimate of another signal.

According to a further aspect, the step of extracting by spectral unmixing from the subset a preliminary estimate of the at least one further signal of the plurality of signals as at least one further unmixed signal may comprise the step of extracting by spectral unmixing from the subset a preliminary estimate of a second signal of the plurality of signals as a second unmixed signal. Here, the at least one further signal mentioned above corresponds to the second signal. An estimate of a dependency of the second unmixed signal on the first unmixed signal may be computed as a second crosstalk quantity. The second crosstalk quantity may be removed from the second unmixed signal to obtain the estimate of the second signal in the subset.

This aspect allows both the estimate of the first signal and the estimate of the second signal to be extracted with improved accuracy. The second signal may correspond to a second fluorescence signal having a second spectrum, wherein the second spectrum represents a second fluorescence emission spectrum. However, the first and second signals need not correspond to fluorescence signals, but may alternatively correspond to reflectance and/or fluorescence excitation signals of different fluorophores.

For example, the first signal may represent the first fluorescence emission spectrum of a first fluorophore and the second signal may represent a second fluorescence emission spectrum of a second fluorophore, the first fluorophore being different from the second fluorophore. Alternatively, the first signal may represent a first fluorescence emission spectrum from a first fluorophore in a first chemical environment and the second signal may represent a second fluorescence emission spectrum from the first fluorophore in a second chemical environment, the second chemical environment being different from the first chemical environment. Again, alternatively, the first signal may represent a fluorescence emission spectrum and the second signal may represent a fluorescence excitation spectrum. The object of interest may be illuminated with light consisting of or comprising the fluorescence excitation spectrum in order to trigger the fluorescence emission.

Analogous to the above steps, an estimate of a third unmixed signal in the subset may be computed using further crosstalk quantities.

For example, the step of extracting by spectral unmixing from the subset a preliminary estimate of at least one further signal of the plurality of signals as at least one further unmixed signal may comprise the step of extracting by spectral unmixing from the subset a preliminary estimate of a third signal of the plurality of signals as a third unmixed signal. A third crosstalk quantity may be computed which is an estimate of the dependencies of the third unmixed signal on the first unmixed signal in the subset and/or a fourth crosstalk quantity may be computed which is an estimate of the dependency of the third unmixed signal on the second unmixed signal in the subset. The third and/or fourth crosstalk quantity may be removed from the third unmixed signal to obtain the estimate of the third signal in the subset. Moreover, a fifth crosstalk quantity may be computed which is an estimate of the dependency of the first unmixed signal on the third unmixed signal. The first crosstalk quantity and the fifth crosstalk quantity may be removed from the first unmixed signal to obtain the estimate of the first signal in the subset. This further improves the accuracy of the estimate of the first signal.

To improve the accuracy of the second signal, a sixth crosstalk quantity may be computed which is an estimate of the dependency of the second unmixed signal from the third unmixed signal. The second crosstalk quantity and the sixth crosstalk quantity may be removed from the second unmixed signal to obtain the estimate of the second signal in the subset.

The third signal may represent a third fluorescence signal of a third fluorophore different from the first and second fluorophores. As with the second signal, the third signal may represent the fluorescence emission spectrum or the fluorescence excitation spectrum of the first, second or third fluorophore, or reflected or transmitted light. According to another aspect, the third signal may represent a third fluorescence emission spectrum of a third fluorophore or of the first fluorophore in a third chemical environment different from the first or second chemical environment.

The digital color input image may represent a color image of a fluorescing object under observation, which object may consist primarily of biological matter or tissue. The colors represented in the digital color input image may extend beyond the human visible spectrum, i.e., include wavelengths below and/or above the visible spectrum, i.e., include wavelengths below 380 nm and/or above 750 nm. The digital color input image preferably represents an imaged spectrum (or, synonymously, is recorded as an imaged spectrum) that overlaps or is contained within or contains the fluorescence spectrum of at least one fluorophore contained in the object under observation. This ensures that the fluorescence of interest is captured.

In one embodiment, the step of extracting by spectral unmixing may comprise one of extracting by linear spectral unmixing and extracting by non-negative tensor factorization. Both linear spectral unmixing and non-negative tensor factorization do not impose a heavy computational burden while providing accurate results in most cases. In this context, a "matrix" is considered to be the special two-dimensional case of a tensor. In other words, a tensor is an n-dimensional matrix, where n > 1.

In particular, the step of extracting by spectral unmixing may comprise solving a set of equations representing a linear superposition of the plurality of signals in the subset. The set of equations may be solved using a minimization routine, e.g. from a software library.

The respective spectrum of the ground truth of the first and, if applicable, second, third, and any further signal is preferably used as an endmember of the spectral unmixing. The contribution of each endmember to the total spectrum recorded in the subset or digital color input image, respectively, is called the abundance. The endmember can be determined experimentally, e.g. by measuring the fluorescence emission spectrum of a fluorophore preferably in the color space of the digital input color image with very high accuracy.

In spectral unmixing, in particular linear spectral unmixing, the step of extracting a preliminary estimate of the first and, if applicable, second, third and/or further signal contained in the subset may comprise the step of computing for the subset an estimate of the mixing tensor. The mixing tensor maps a ground truth of the respective first and, if applicable, second, third and/or further signal onto the respective first and, if applicable, second, third and/or further signal in the subset. As stated above, the signals in the subset are represented by color channel coordinates. Thus, strictly speaking, the mixing tensor maps the ground truth of a signal to its (recorded) representation in color space. The mixing tensor is computed separately for each subset.

In a further embodiment, the step of extracting a preliminary estimate of the first and, if applicable, second, third or further signal from the subset may comprise the step of computing an estimate of the mixing tensor using minimization. In one example, an estimate of the mixing tensor may be computed by minimizing a $L_n$-Norm. Moreover, the computed estimate of the mixing tensor may minimize a deviation of one, some or all signals contained in the subset from linearly transformation of the endmembers of the respective signal(s) by the estimate of the mixing tensor. The deviation may be represented by any $L_n$ norm, where $n$ is a natural number.

The on-diagonal elements of the crosstalk tensor represent the contribution of the respective ground truth signal in the subset. For example, the first on-diagonal element of the crosstalk tensor may correspond to the contribution of the first signal in the subset, the second on-diagonal element of the crosstalk tensor may correspond to the contribution of the second signal in the subset. The on-diagonal elements of the crosstalk tensor corresponding to signals representing fluorescence emission of a fluorophore are indicative of the concentration of the respective fluorophore at the location of the object under observation, which location is mapped to the subset.

In another embodiment, the step of computing the crosstalk quantity may comprise computing a probability that the first, second, third and/or further unmixed signal corresponds to the respective first, second, third and/or further signal. In a particular embodiment, the crosstalk quantity may be computed from the mixing tensor, in particular from the off-diagonal elements of the mixing tensor.

Alternatively or cumulatively, the step of computing the crosstalk quantity may comprise computing a correlation or covariance between one signal and another signal. The covariance may be computed from the correlation.

In particular, the crosstalk quantity may be computed as the correlation or covariance between one signal of the plurality of signals in the subset and another different signal of the plurality of signals in the subset. In other words, the crosstalk quantity is computed from the correlation or covariance between that signal of the plurality of signals in the subset from which the crosstalk quantity is removed and another signal of the plurality of signals. In another approach, the covariance may be computed using Bayesian estimators. For example, the first crosstalk quantity may be computed from the correlation or covariance between the first and third signals. This applies *mutatis mutandis* to the second to sixth and any further crosstalk quantity.

Since matrix computations are more computationally efficient, it may be preferred that the step of computing the crosstalk quantity comprise computing a crosstalk tensor of which the crosstalk quantity is an element, in particular an off-diagonal element.

The dimension of the crosstalk tensor can be determined by the number of unmixed signals from which the crosstalk tensor is computed. For example, if the crosstalk tensor is computed from two unmixed signals, the crosstalk tensor may have a dimension of $2 \times 2$. If the crosstalk tensor is computed from three unmixed signals, the crosstalk tensor may have a dimension of $3 \times 3$, and so on. Here, each element of the crosstalk tensor may contain all color space coordinates of the color space of the digital input image.

The step of computing the crosstalk quantity may comprise the step of computing the crosstalk quantity from the off-diagonal elements of the crosstalk tensor. In a particular case, a crosstalk quantity may correspond to an off-diagonal element of the crosstalk tensor.

In a variant, the step of computing the crosstalk tensor and/or the crosstalk quantity may comprise computing at least one of computing a covariance tensor and computing a Fisher information tensor from the unmixed signals.

Computing the covariance tensor may comprise computing the covariance tensor from a weighted estimate of the mixing tensor. The weight may be subset dependent, i.e., different for each different subset. For example, the weight may depend on the preliminary estimate of the first, second, third and/or any further signal. The weight could be composed from the average values of the preliminary estimates of the signals in the subset, i. e. a vector that weighs each column of the mixing tensor separately. The weight could also be composed from the median of the preliminary estimates of the signals in the subset. The weight could also be a scalar that is computed from the preliminary estimates of the signals in the subset, e. g. the global mean of all preliminary estimates of the signals in the subset.

To improve the unmixed signals in the subset, the crosstalk quantity may be removed in various ways. For example, the step of removing a crosstalk quantity from an unmixed signal may comprise one of: subtracting the crosstalk quantity from the unmixed signal; and multiplying the unmixed signal by the crosstalk quantity. The crosstalk quantity is preferably represented in unmixed signal space, i.e. independent of any color space. Signal space is formed by using the endmembers as "coordinates".

The crosstalk quantity may be weighted additively and/or multiplicatively by a preferably user-controllable weight parameter. The weight parameter may be a scalar, which in particular may be constant for all signals in a subset.

The crosstalk quantity may depend on or correspond to the off-diagonal elements of the covariance tensor. In a particular example, the crosstalk quantity for an unmixed signal may be computed using a sum of those off-diagonal elements of the covariance tensor that are representative of the correlation between this unmixed signal and the other unmixed signals. The weight parameter may be applied to this sum.

The crosstalk quantity may be subtracted directly from the respective unmixed signal. If the result of the subtraction is negative, all pixels of the subset may be set to zero. All pixels in the subset may even be set to zero if a single signal becomes negative in signal space after the subtraction of the crosstalk quantity.

Another form of the crosstalk quantity may e.g. derived by using the optionally weighted sum of the off-diagonal elements of the covariance matrix as a negative exponent of some number. Such a crosstalk quantity represents a confidence value that decreases exponentially with the sum of the off-diagonal elements of the covariance tensor. Such a crosstalk quantity may be used for multiplication with the respective signal in the subset. Thus, the unmixed signal will be increasingly attenuated if it is highly correlated with other unmixed signals.

The digital color input image may be retrieved from a storage, such as a memory of the data processing device and/or the optical observation device. The storage may reside in a cloud, on a disc or in any other non-volatile memory. Alternatively, the digital color input image may be retrieved directly from a camera of the optical observation device.

According to another embodiment, a separate digital color output image may be generated from the estimate of the first signal and, if applicable, second signal and/or any further signal. Alternatively, all estimates may be combined into a single digital color output image.

The subsets of the digital color input image that are used for computation of the estimates of the first and, if applicable, any further signal are preferably located in the digital color output image at the same location as in the digital color input image. The digital color input image and the digital color output image are preferably registered with respect to one another.

The estimate of the first and/or any further signal, and/or the digital color output image may be presented e.g. in a memory of the data processing device, for access in particular from outside the digital processing device. This access may, for example, be used to display the estimate(s) and/or the digital color output image.

The invention also relates to a computer program comprising instructions, which, when the program is executed by a computer, cause the computer to carry out the method as described in any of the above embodiments.

Further, the invention relates to a computer-readable medium having stored thereon such a computer program.

As already stated above, the data processing device may be configured to carry out any of the steps or embodiments described above.

The computer-implemented method in any of the above embodiments may be part of a method of using an optical observation device, such as a microscope or endoscope. The microscope may be a laboratory microscope or a surgical microscope. Further, the microscope may be a fluorescence microscope, such as a fluorescence surgical microscope or a fluorescence laboratory microscope. The method of using the optical observation device may further comprise the step of recording at least one color image of an object under investigation and generating the digital color input image from the at least one color image.

The step of generating the color input image from the at least one color image may comprise computing the digital color input image from a plurality of different color images. Thus, different color images may be combined into a single digital color input image.

In its simplest form, the digital color input image may be directly retrieved from a camera.

The optical observation device may comprise at least one camera, in particular at least one fluorescence camera, for recording the first and any further signal. The at least one camera of the optical observation device may be configured to record at least one color image, wherein the optical observation device is configured to generate the digital color input image from the at least one color image as described above.

In one advantageous embodiment, the data processing device may comprise or consist of an embedded system of the optical observation device.

The embedded system may, for example, be configured to control the optical observation device, such as controlling actuators for moving the object under observation, for autofocus, for autotracking, for shifting a lens to vary focus and/or focal length, for shifting a microscope table, for controlling illumination of the object under observation, such as an illumination spectrum and/or an illumination brightness.

The optical observation device may comprise a graphical user interface in hardware and/or software. The graphical user interface may comprise interaction areas, which are designed for user input. For example, user-controllable parameters that are used in the data processing device and/or the computer-implemented method in any of the above embodiments, may be altered depending on user interaction with the interaction areas.

The interaction areas may alternatively or accumulatively be used for controlling the optical observation device.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

In the following, the proposed solution to the above problem is exemplarily described with reference to the drawings, using an embodiment of the invention. In the drawings, the same reference numerals are used for elements that correspond to each other with respect to function and/or physical structure.

Moreover, according to the above description, an element which is described below in the context of an embodiment may be omitted from the embodiment if its technical effect is not needed for a specific application. Vice versa, an element described above but not in the context of the embodiments below may be added to the embodiments if the technical effect linked to that element is advantageous in a specific application.

Fig. 1A     shows a schematic representation of an object under observation, which includes signal sources;

Fig. 1B     shows a schematic representation of a digital color input image of the object shown in Fig. 1A;

Fig. 2     shows a schematic representation of a method for computing the signals shown in Figs. 1A and 1B;

Fig. 3     shows a schematic representation of the effect of crosstalk;

Fig. 4     shows a schematic representation of an optical observation device.

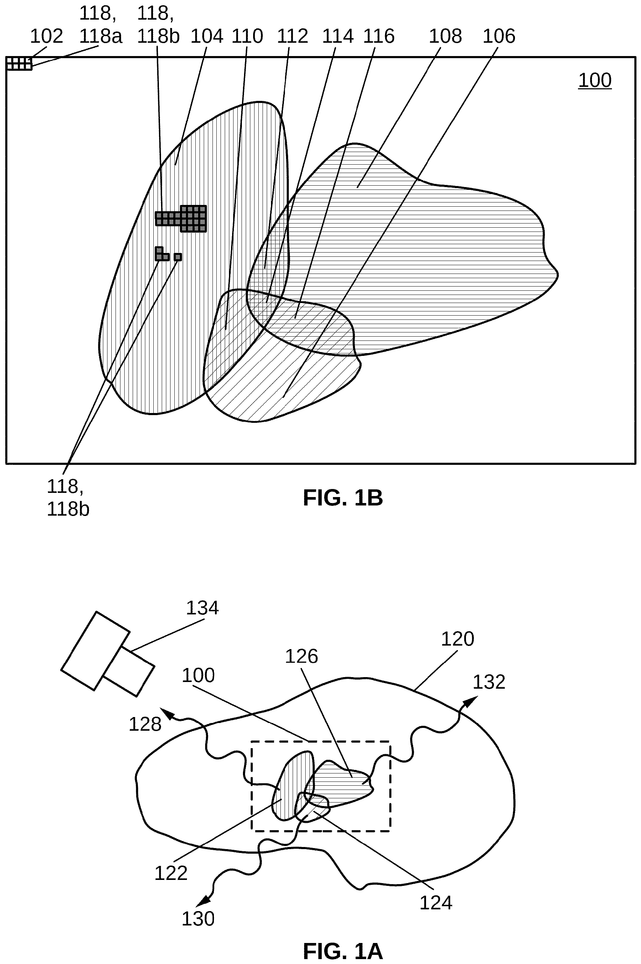

In Fig. 1A an object 120, which is under investigation by an optical observation device 134, such as a laboratory or surgical microscope or an endoscope is shown.

The object 120 preferably comprises or consists of biological tissue. For example, the object 120 may be a cell, a part of a cell such as an organelle, or part of the body of an organism such as an animal or a plant.

The object 120 contains one or more sources 122, 124, 126 of ground-truth signals 128, 130, 132 that the optical observation device 134 is configured to record. The ground-truth signals 128, 130, 132 are generated by the at least one source 122, 124, 126 in form of light that may include, overlap or be restricted to the visible spectrum. A source 122, 124, 126 may, for example, be a fluorophore, which emits fluorescence in a fluorescence emission spectrum. The fluorescence emission spectrum is different for each different fluorophore and/or may depend on the chemical environment in which the fluorophore is located. The fluorophore may have been added artificially to the object 120 or may be present naturally in the object 120.

Alternatively or cumulatively, a source 122, 124, 126 may be a material that reflects or transmits light, by which the object 120 is illuminated in a particular transmittance spectrum and/or reflectance spectrum, respectively. Again alternatively or accumulatively, a source 122, 124, 126 may be an area which is illuminated by an illumination spectrum which is transmitted, reflected and/or triggers fluorescence. Any number of sources may be contained in the object 120. Three source have only been selected as an example to facilitate understanding.

A ground-truth signal 128, 130, 132 that is generated by the at least one source 122, 124, 126 is recorded as a signal 104, 106, 108 in a digital color input image 100 as shown in Fig. 1B by the optical observation device 134. Any number of signals may be represented in the digital color input image 100. It is preferred, however, that the number of color channels, or, synonymously, color space coordinates is at least as large as the number of signals or sources that are recorded in the digital color input image 100 and are to be discerned from one another.

The digital color input image 100 is a color image, for example a tristimulus, multispectral or hyperspectral image. The digital color input image 100 contains a plurality of color channels or, synonymously, color space coordinates. The digital color input image 100 may be represented in any color space. Each color space defines a tuple of color space coordinates, which define a color. Different color space coordinates may be transformed into one another. This transformation, however, is not necessarily bijective.

The digital color input image 100 may be generated from a plurality of individual color images that may have been recorded sequentially by a single camera and/or in parallel by more than one camera of the optical observation device 134.

The digital color input image 100 contains a plurality of pixels 102. Each pixel 102 comprises a tuple of color space coordinates, which determine the color of the pixel 102. Each area of the object 120 is mapped to a different region.

The digital color input image 100 may be divided into proper subsets 118, which each comprises at least one pixel. Each subset 118 represents an area of the digital color input image 100 and thus a region of the object 120. A subset 118 may be a connected, but not necessarily simply connected, region or a disconnected region of the digital color input image 100. Each subset 118 comprises at least one pixel. In the simplest case, each subset 118 contains only a single pixel. The subsets 118 may be processed individually when processing the digital color input image 100. Reference numerals 118a and 118b indicate different subsets 118, each comprising at least one pixel 102.

The at least one signal 104, 106, 108 that is recorded in the digital color input image 100, is only an approximation of the respective at least one ground-truth signal 128, 130, 132 that is generated by the at least one source 122, 124, 126, because the recording process invariably creates artefacts, such as noise, distortion, and other linear and/or non-linear errors.

According to Fig. 1B, a first signal 104 is recorded in the digital color input image 100 as representing the ground-truth signal 128 generated by the source 122. A further, here second signal 106 is recorded in the digital color input image 100 as representing the ground-truth signal 130 generated by the second source 124. A further, here third signal 108 may be recorded in the digital color input image 100 as representing the ground-truth signal 132 generated by the third source 126.

In some or all areas of the object 120, more than one source 122, 124, 126 may be present. In such an area, more than one ground-truth signal 128, 130, 132 is generated. Consequently the region of the digital color input image 100 to which this area of the object 120 is mapped contains more than one signal 104, 106, 108. For example, the first signal 104 and the second signal 106 overlap in a region 110 of the digital color input image 100, the first signal 104 and the third signal 108 overlap in at least one region 112 of the digital color input image 100, the second signal 106 and the third signal 108 overlap in at least one region 116 of the digital color input image 100, and all three signals 104, 106, 108 overlap in a region 114 of the digital color input image 100. In the regions 112, 114, 116, each color space coordinate results from a superposition of at least two signals 104, 106, 108 and artefacts.

Due to physical processes that take place in the object 120 and/or in the recording process, a signal 104, 106, 108 in the digital color input image 100 may be influenced by at least one other signal 104, 106, 108. For example, signals 104, 106 may exhibit a mutual linear or non-linear dependency, which might be unknown a priori. The same may hold for any other combination of signals 104, 106, 108.

To separate the signals 104, 106, 108 from one another, linear or non-linear unmixing is applied, depending on whether one assumes a linear or non-linear dependency of the signals 104, 106, 108 from one another. Spectral unmixing is applied to each subset 118 separately, i.e., each subset 118 is processed individually. Spectral unmixing may be performed for a plurality of subsets 118 until a desired part of the digital color input image 100 has been processed. The part of the digital color input image 100 to be processed may be user-controllable. The subsets 118 processed may be overlapping or non-overlapping. Due to the decreased numerical effort, it may be preferred that the subsets 118 do not overlap.

If spectral unmixing is applied to the digital color input image 100, unmixed signals, i.e., preliminary estimates 210, 212, 214 of the signals 104, 106, 108 are obtained.

A subset 118 may be defined by pixels 102 that share a predetermined, preferably user-controllable range of at least one color appearance parameter, such as hue, lightness, brightness, chroma, colorfulness and saturation. For example, a subset 118 may be defined by pixels 102, where the hue is in a predefined numerical range and, at the same time, also the brightness is within a predefined numerical range.

Additionally or cumulatively, the pixels 102 in a subset 102 may satisfy a geometrical constrain, such as not being located further away from one another than a predetermined, preferably user-controllable distance, or not cover an area which is larger than a predetermined, preferably user-controllable area of the digital color input image 100. In a very simple embodiment, a subset may comprise a square arrangement of pixels, such as $2 \times 2$ or $3 \times 3$.

In the following, the determination of an improved estimate of a signal 104, 106, 108 is exemplarily described using linear spectral unmixing. In this model, the signals 104, 106, 108 as recorded in the digital input color image 100 are assumed to result from the ground truth signals 128, 130, 132 as generated by the sources 122, 124, 126 by a linear transformation. The linear transformation is represented by an unknown mixing tensor $M_{cd}$:

$$y_{cp} = \sum_{d=1}^{N_d} M_{cd}\, x_{dp}.$$

Here, $y_{cp}$ indicates the color space coordinate $c$ of the recorded signal $y$ at the specific subset 118 having index $p$. The index $d$ represents the index of the ground-truth signal 128, 130, 132. $N_d$ is the total number of ground-truth signals. $x_d$ represents the ground truth signal 128, 130, 132 having index $d$. The index $d$ may be considered as representing the different sources 124, 126, 128. The mixing tensor has a dimension $N_c \times N_d$, where $N_c$ is the number of color space coordinates of the color space, in which the spectral unmixing is performed.

The ground-truth signal, $x_{dp}$ represents the spatial distribution of e.g. the fluorophore concentration of fluorophore $d$ across the various subsets $p$.

The above equation may be solved for the unknown mixing tensor $M$, e.g. by maximum likelihood estimation, in particular by, by blind unmixing, by linear unmixing or by non-negative tensor factorization.

For example, as described in Zimmermann, Timo: "Spectral Imaging and Lieanr Unmixing in Light Microscopy", Adv Biochem Engin/Biotechnol (2005) 95:245-265, the mixing tensor may be computed completely from a-priori knowledge. The a-priori knowledge may comprise the spectral signatures of the respective ground-truth signals that can be measured experimentally. Such a spectral signature may e.g. be the fluorescence emission spectrum of a fluorophore or the illumination spectrum of a particular light source.

Using minimization, an estimate $\hat{M}$ of the the unknown mixing tensor $M$ may be computed for example by minimizing the $L_n$ norm

$$L_n = \sum_{p=1}^{N_p} \sum_{c=1}^{N_c} \left| y_{cp} - \sum_{d=1}^{N_d} \hat{M}_{cd} x_{dp} \right|^n,$$

where n is an integer larger than zero.

Once the estimate $\hat{M}$ of the unknown mixing tensor $M$ has been computed, a preliminary estimation of the signals generated by the sources 122, 124, 126 can be computed from the recorded signals 104, 106, 108, i.e., $y$ as follows:

$$\hat{x}_{dp} = \sum_{c=1}^{N_c} \hat{M}_{dc}^{-1} y_{cp},$$

where $\hat{x}_{dp}$ represents the preliminary estimate - the "unmixed signal" - of the ground-truth signal 128, 130, 132 having index $d$ at the subset 118 having index $p$. The preliminary estimate $\hat{x}_d$ in the respective subset is, e.g., an indication of the concentration of the fluorophore generating the ground truth signal having index $d$ in the region of the object 120 that corresponds to the subset 118. $\hat{x}_{dp}$ represents a preliminary estimate of the strength of the ground-truth signal independent from the underlying color space.

In order to further improve the accuracy of the unmixed signal $\hat{x}_{dp}$, a crosstalk quantity representative of the crosstalk between the signals 104, 106, 108 is computed and removed from the unmixed signal.

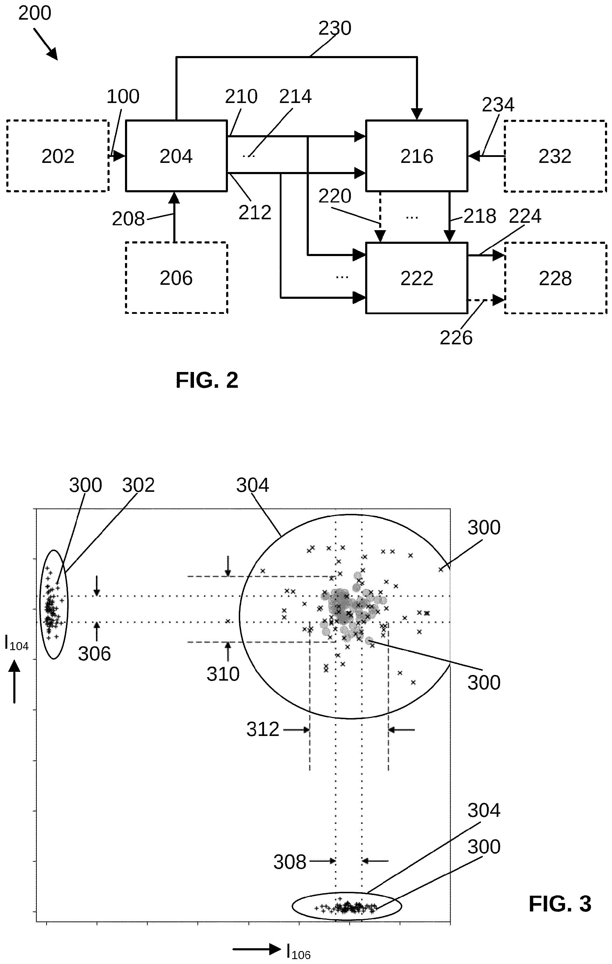

The effect of crosstalk or, equivalently, the dependency of one unmixed signal on the other unmixed signals, is explained with reference to Figs. 3 and 5.

The effect of crosstalk is schematically shown in Fig. 3. Along the vertical axis, the intensity $I_{104}$ of the signal 104 in the digital input image 100 increases. Along the horizontal axis, the intensity $I_{106}$ of the second signal 106 in the digital input image 100 increases. Each measurement point 300 in this drawing represents the intensity of the measured signal in a different subset 118 of the digital color input image 100.

Reference numeral 302 denotes the range of intensities in subsets 118 where only the signal 104 is present. Thus the intensities may be attributed to signal 104. Reference numeral 304 denotes the range intensities in subsets 118 where only the signal 106 is present and the intensities may be attributed to signal 106. The ranges of intensities 302 and 304 show a spread, which can be represented by a statistical metric 306, 308, respectively. One such metric may be the standard deviation.

In subsets of the digital color input image 100 where both signals 104 and 106 are present, such as a subset 118 in the area 110 of Fig. 1B, the unmixed signals may exhibit a range 304 of intensities. It can be seen that the metric 310 of the spread of signal 104 in the presence of signal 106 is larger than the metric 306 of the signal 104 if no other signal is present. The difference between the metrics 306 and 310 is due to crosstalk or bleed from signal 106 to signal 104. The same applies *mutatis mutandis* to signal 106. The metric 312 of the spread of signal 106 in the presence of signal 104 is larger than the metric 306 of the signal 106 if no other signal is present. The difference between the metrics 308 and 312 is due to crosstalk or bleed from signal 104 to signal 106. These differences are captured by a crosstalk quantity, which represents the dependency of one signal of another signal.

The crosstalk is not considered in spectral unmixing. Thus, the unmixed signals $\hat{x}_{dp}$ still contain crosstalk components, especially if there is spectral overlap of the signals 104, 106, 108 in a subset 118., i.e., the unmixed signal $\hat{x}_{d0p}$ may exhibit dependencies from one or more unmixed signals $\hat{x}_{d1p}$, where $d_0 \neq d_1$.

An estimate of a dependency of the first unmixed signal $\hat{x}_{1p}$ on the second unmixed signal $\hat{x}_{2p}$ in the subset 118 having index $p$ may be represented a (first) crosstalk quantity. An estimate of a dependency of the second unmixed signal $\hat{x}_{2p}$ on the first unmixed signal $\hat{x}_{1p}$ in the subset 118 having index $p$ may be represented as another (second) crosstalk quantity. Thus, for $N_d$ unmixed signals, there are the crosstalk quantities $C_{mn}$, where $m = 1 ... N_d$, $n = 1 ... N_d$ and $m \neq n$, representing the dependency of the $m$-th signal on the $n$-th signal.

The at least one crosstalk quantity may be computed using statistical methods, for example by computing a correlation, in particular cross-correlation, or covariance between the various pairs of non-identical unmixed signals $\hat{x}_{dp}$.

In one example, a covariance tensor or matrix, or a Fisher information tensor or matrix may be computed from the unmixed signals $\hat{x}_{dp}$. In such a case, the crosstalk quantity may be derived from or represent an element, in particular an off-diagonal element, of a covariance matrix or a Fisher information matrix.

The crosstalk quantity may also be computed using Bayes estimators.

In another, more specific example, a crosstalk matrix may consist or comprise the elements $C_{mn}$ that can be calculated from the covariance matrix through a $\chi^2$-minimization.

Besides other known methods for computing the covariance, it is preferred here to compute the elements of the covariance tensor as follows:

$$Cov_{d_1 d_2} = \left( \sum_{c=1}^{N_c} \hat{M}_{d_1 c}^T \hat{M}_{c d_2} \right)^{-1},$$

where $d_1$ and $d_2$ denote different unmixed signals. As the estimate $\hat{M}$ of the mixing tensor $M$ is computed for every subset 118 separately and depends on the signals 104, 106, 108 in the respective subset 118, the covariance tensor $Cov$ varies from subset to subset, i.e., strictly speaking, $Cov_{d1d2} = Cov_{d1d2}(p) = Cov_{d1d2p}$. The crosstalk quantity may be derived from or correspond to at least some of the off-diagonal elements of the covariance tensor.

To compute a crosstalk quantity $C_p$ for the subset 118 having index $p$, the covariance tensor may be weighted with a preferably user-controllable weight factor $\alpha$ and its off-diagonal element may be combined, e.g., by being added:

$$C_{d_2 p} = \alpha \sum_{d_1 \neq d_2} Cov_{d_1 d_2 p}.$$

This crosstalk quantity may, e.g., be subtracted from the unmixed signal in the subset 118 having index $p$ to obtain an improved estimate $\tilde{x}_{dp}$ for the ground-truth signals 128, 130, 132 at each subset 118:

$$\tilde{x}_{dp} = \hat{x}_{dp} - C_{dp}.$$

If the above subtraction yields a negative value, $\tilde{x}_{dp}$ is set to zero.

Alternatively, another crosstalk quantity $\tilde{C}$ may be derived from the optionally normalized crosstalk quantity $C$ in the form of a confidence value:

$$\tilde{C}_{dp} = \exp\left(-C_{dp}/\hat{x}_{dp}\right).$$

The confidence value represents a scalar, normalized metric for the share of crosstalk in the overall intensity of the unmixed signal in the respective subset 118. The confidence value cannot become negative, which is convenient for further calculation.

Using the confidence value as crosstalk quantity, an improved estimate of a ground-truth signal may be computed from the unmixed signal as follows:

$$\tilde{x}_{dp} = \hat{x}_{dp} \tilde{C}_{dp}.$$

In this formula, the crosstalk quantity is removed multiplicatively from the unmixed signal. The unmixed signal is weighted by the confidence value. If the crosstalk that is represented in the off-diagonal elements of the crosstalk tensor becomes large, the estimate becomes small.

Fig. 2 presents a schematic overview of how the method 200 for enhancing the unmixed signals 210, 212, 214 may be executed.

In a first step 202, the digital color input image 100 may be generated e.g. by at least one camera of the optical observation device 134. Alternatively, the already generated digital color input image 100 may be retrieved, either directly from a camera or from a storage device.

At step 204, spectral unmixing is performed for a subset 118 (Fig. 1B) of the digital color input image 100.

At step 206, endmembers 208 may be retrieved e.g. from a storage device, and fed to the spectral unmixing process or step 204. As a result of the spectral unmixing, a number of unmixed signals 210, 212, ..., 214 are extracted from the subset 118. The unmixed signals 210, 212, 214 correspond to $\hat{x}_{dp}$ above. For example, unmixed signal 210 corresponds to the first unmixed signal, $\hat{x}_{1p}$, unmixed signal 212 corresponds to the second unmixed signal, $\hat{x}_{2p}$, and unmixed signal 214 may correspond to a third, fourth or in general "further" un-

mixed signal, $\hat{x}_{dp}$, where $d \geq 2$.

At step 216, the first crosstalk quantity 218 and any further crosstalk quantity 220 are computed as described above. The number of crosstalk quantities computed in step 216 may depend on the number of unmixed signals extracted from the respective subset 118 at step 204. The at least one crosstalk quantity 218 may be computed depending on the estimate of the mixing tensor 230, which is determined at step 204.

At step 222, the crosstalk quantity 218 may be subtractively or multiplicatively removed from the respective unmixed signal 210, 212 to obtain the improved signal estimates 224, 226, i.e., $\bar{x}_{dp}$.

At step 232, a weighting factor 234, i.e. $\alpha$, is retrieved that is used for computing the crosstalk quantity. For example, the weight factor may be entered by a user.

Post-processing of the signal estimates, such as displaying the signal estimates 224, 226 or combining them into a single digital output image may take place at step 228.

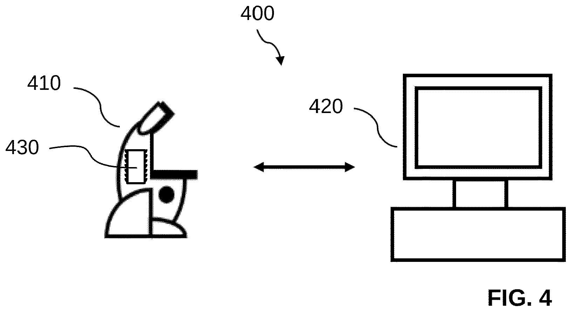

Some embodiments relate to a microscope comprising a system as described in connection with one or more of the Figs. 1 to 3 and 5. Alternatively, a microscope may be part of or connected to a system as described in connection with one or more of the Figs. 1 to 3 and 5. Fig. 4 shows a schematic illustration of a system 400 configured to perform a method described herein. The system 400 comprises a microscope 410 and a computer system 420. The microscope 410 is configured to take images and is connected to the computer system 420. The microscope 410 may comprise a data processing device 430, which may be an embedded processor of the microscope 410 or the system 400.

The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## REFERENCE NUMERALS

| | |
|---|---|
| 100 | digital color input image |
| 102 | pixel |
| 104 | first signal |
| 106 | further signal/second signal |
| 108 | further signal/third signal |
| 110 | overlap area |
| 112 | overlap area |
| 114 | overlap area |
| 116 | overlap area |
| 118 | subset |
| 120 | object to be observed |
| 122 | source of first (ground truth) signal |
| 124 | source of second (ground truth) signal |
| 126 | source of third (ground truth) signal |
| 128 | ground-truth signal |
| 130 | ground-truth signal |
| 132 | ground-truth signal |
| 134 | optical observation device |
| 200 | method |
| 202 | generating/generating the digital color input image |
| 204 | spectral unmixing |
| 206 | retrieving endmembers |
| 208 | endmember |
| 210 | first unmixed signal/preliminary estimate of first signal |
| 212 | second unmixed signal/preliminary estimate of second signal |
| 214 | further unmixed signal(s)/preliminary estimate of further signal(s) |
| 216 | computing crosstalk quantity |
| 218 | (first) crosstalk quantity |
| 220 | further crosstalk quantity |
| 222 | removing crosstalk quantity |
| 224 | estimate of first signal |
| 226 | estimate of further signal |
| 228 | post-processing |
| 230 | mixing tensor/matrix |
| 232 | retrieving weighting factor |
| 234 | weighting factor |
| 300 | measurement point |
| 302 | distribution of intensities if only first signal is present |
| 302 | distribution of intensities if only second signal is present |
| 304 | distribution of intensities if both are present |
| 306 | metric of spread of distribution 300 |
| 308 | metric of spread of distribution 302 |
| 310 | metric of spread of first signal if both signals are present |
| 312 | metric of spread of second signal if both signals are present |
| 400 | optical observation device/system |
| 410 | microscope |
| 420 | data processing device/(general purpose) computer |
| 430 | embedded system |
| I | intensity of a signal |
| $\lambda$ | wavelength |

## Claims

1. Computer-implemented method (200) for computing an estimate (224) of a first signal (104) of a plurality of signals, the plurality of signals being contained in a digital color input image (100), each signal of the plurality of signals having a different ground truth spectrum (302, 308), the digital color input image (100) comprising a plurality of pixels (102);
wherein the computer-implemented method (200) comprises the steps of:

   - extracting a proper subset (118) from the plurality of pixels (102);
   - extracting from the subset (118) by spectral unmixing (204)

      = a preliminary estimate of the first signal (104) as a first unmixed signal (210) and
      = a preliminary estimate of at least one further signal (106, 108) of the plurality of signals as at least one further unmixed signal (212, 214);

   - computing (216) from the subset (118) an estimate of a dependency of the first unmixed signal (210) on the at least one further signal (212, 214) as a crosstalk quantity (218, 220) for the subset; and
   - removing (222) the crosstalk quantity (218, 220) from the first unmixed signal (210) to obtain the estimate (224) of the first signal (104) for the subset (118).

2. Computer-implemented method (200) according to claim 1,

   wherein the step of extracting by spectral unmixing (204) from the subset (118) a preliminary estimate of at least one further signal (106, 108) of the plurality of signals as at least one further unmixed signal (212, 214) comprises the step of

      - extracting by spectral unmixing (204) from the subset (118) a preliminary estimate of a second signal (106) of the plurality of signals as a second unmixed signal (212); and

   wherein the computer-implemented method (200) further comprises the steps of:

      - computing an estimate of a dependency of the second unmixed signal (212) on the first unmixed signal (210) as a second crosstalk quantity (220) in the subset (118); and
      - removing the second crosstalk quantity (220) from the second unmixed signal (212) to obtain the estimate (226) of the second signal (106) in the subset (118).

3. Computer-implemented method (200) according to claim 1 or 2,
wherein the step of extracting by spectral unmixing (204) comprises one of:

   - extracting by linear spectral unmixing;
   - extracting by non-negative tensor factorization.

4. Computer-implemented method (200) according to any one of claims 1 to 3,
wherein the step of computing (216) the crosstalk quantity (218, 220) comprises

   - computing a probability that the first unmixed signal (210) corresponds to the first signal (104).

5. Computer-implemented method (200) according to any one of claims 1 to 4,
wherein the step of computing the crosstalk quantity (218, 220) comprises computing a correlation.

6. Computer-implemented method (200) according to any one of claims 1 to 5,
wherein the step of computing (216) the crosstalk quantity (218, 220) comprises computing a crosstalk tensor of which the crosstalk quantity (218, 220) is an element.

7. Computer-implemented method (200) according to claim 6,
wherein the step of computing (216) the crosstalk tensor comprises computing at least one of:

   - computing a covariance tensor;
   - computing a Fisher information tensor.

8. Computer-implemented method (200) according to any one of claims 1 to 7,
wherein the step of removing (222) a crosstalk quantity (218, 220) from an unmixed signal (210, 212) comprises one of:

   - subtracting the crosstalk quantity (218, 220) from the unmixed signal (210, 212); and
   - multiplying the unmixed signal (210, 212) by the crosstalk quantity (218, 220).

9. Computer-implemented method (200) according to any one of claims 1 to 8,
wherein the subset (118) corresponds to a single pixel (102) of the plurality of pixels of the digital color input image (100).

10. Computer program comprising instructions, which, when the program is executed by a computer, cause the computer to carry out the method of any one of claims 1 to 9.

11. A computer-readable medium having stored thereon the computer program of claim 10.

12. Method of using a medical optical observation device, such as a microscope or endoscope, comprising the steps of:

   - recording at least one color image and generating the color input image from the at least one color image;
   - executing the computer-implemented method according to any one of claims 1 to 9.

13. Data processing device (420, 430) for computing an estimate (224) of a first signal (104) of a plurality of signals, the plurality of signals being contained in a digital color input image (100), each signal of the plurality of signals having a different ground truth spectrum (302, 308),
   wherein the data processing device (420, 430) is configured to:

   - retrieve a proper subset (118) of the plurality of pixels (102) of the digital color input image (100);
   - extract from the subset (118) by spectral unmixing (204)

      = a preliminary estimate of the first signal (104) as a first unmixed signal (210) and
      = a preliminary estimate of at least one further signal (106, 108) of the plurality of signals as at least one further unmixed signal (212, 214);

   - compute (216) an estimate of a dependency of the first unmixed signal (210) on the at least one further signal (212, 214) as a crosstalk quantity (218, 220) for the subset (118);
   - remove (222) the crosstalk quantity (218, 220) from the first unmixed signal (210) to obtain the estimate (224) of the first signal (104) in the subset (118).

14. Optical observation device (400, 410), such as a microscope or endoscope, the optical observation device being configured to record a digital color input image (100), the medical optical observation device (400, 410) further comprising:

   - the data processing device (420, 430) according to claim 13.

15. Optical observation device (400, 410) according to claim 14,
   wherein the data processing device (420) comprises or consists of an embedded system (430) of the optical observation device (400, 410).

**FIG. 1B**

**FIG. 1A**

FIG. 2

FIG. 3

**FIG. 4**

| Europäisches Patentamt / European Patent Office / Office européen des brevets | **EUROPEAN SEARCH REPORT** | **Application Number** EP 24 16 4167 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/089749 A1 (AMTHOR MANUEL [DE] ET AL) 25 March 2021 (2021-03-25) * paragraphs [0002], [0070] - [0080], [0092]; figures 1-4 * | 1-11, 13-15 | INV. G06T7/00 G06T7/90 G01N21/64 G01J3/44 G06V20/69 |
| A | NEHER RICHARD A. ET AL: "Blind Source Separation Techniques for the Decomposition of Multiply Labeled Fluorescence Images", BIOPHYSICAL JOURNAL, vol. 96, no. 9, 6 May 2009 (2009-05-06), pages 3791-3800, XP093079215, AMSTERDAM, NL ISSN: 0006-3495, DOI: 10.1016/j.bpj.2008.10.068 * the whole document * | 1-15 | |
| A | MURAD MEGJHANI ET AL: "Morphologically constrained spectral unmixing by dictionary learning for multiplex fluorescence microscopy", BIOINFORMATICS, vol. 33, no. 14, 15 July 2017 (2017-07-15) , pages 2182-2190, XP055589656, GB ISSN: 1367-4803, DOI: 10.1093/bioinformatics/btx108 * Sections 3, 3.1-3.5; page 2184 - page 2187; figures 1-3 * -/-- | 1-15 | **TECHNICAL FIELDS SEARCHED (IPC)** G01J G01N G06T G06V |

The present search report has been drawn up for all claims

| Place of search | Date of completion of the search | Examiner |
|---|---|---|
| Munich | 26 July 2024 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 16 4167

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Timo Zimmermann: "Spectral Imaging and Linear Unmixing in Light Microscopy" In: "ADVANCES IN BIOCHEMICAL ENGINEERING, BIOTECHNOLOGY.", 1 January 2005 (2005-01-01), SPRINGER, BERLIN, DE, XP055589696, ISSN: 0724-6145 vol. 95, pages 245-265, DOI: 10.1007/b102216, * the whole document * ----- | 1-15 | |

TECHNICAL FIELDS
SEARCHED (IPC)

The present search report has been drawn up for all claims

| Place of search | Date of completion of the search | Examiner |
|---|---|---|
| Munich | 26 July 2024 | Seytter, Fritz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 24 16 4167

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2024

| Patent document cited in search report | Publication date | Patent family member(s) | Publication date |
|---|---|---|---|
| US 2021089749 A1 | 25-03-2021 | DE 102018104616 A1 | 29-08-2019 |
| | | US 2021089749 A1 | 25-03-2021 |
| | | WO 2019166361 A1 | 06-09-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZIMMERMANN, TIMO**. Spectral Imaging and Lieanr Unmixing in Light Microscopy. *Adv Biochem Engin/-Biotechnol*, 2005, vol. 95, 245-265